Europäisches Patentamt

European Patent Office

Office européen des brevets

(19)

(11) Veröffentlichungsnummer: **0 078 920**
A2

# EUROPÄISCHE PATENTANMELDUNG

(21) Anmeldenummer: **82109276.4**

(22) Anmeldetag: **07.10.82**

(51) Int. Cl.³: **B 28 D 1/08**

(30) Priorität: **09.11.81 DE 3144482**

(43) Veröffentlichungstag der Anmeldung:
**18.05.83 Patentblatt 83/20**

(84) Benannte Vertragsstaaten:
**BE DE FR IT**

(71) Anmelder: **Maschinenfabrik Korfmann GmbH
Dortmunder Strasse 36
D-5810 Witten(DE)**

(72) Erfinder: **Mylewski, Johann
Wibbeltstrasse 31
D-4630 Bochum-Wattenscheid(DE)**

(74) Vertreter: **Patentanwälte Wenzel & Kalkoff
Ruhrstrasse 26 Postfach 2448
D-5810 Witten(DE)**

(54) **Maschine zum Antrieb eines Diamantdrahtseiles für das Schneiden von Steinen.**

(57) Die Erfindung betrifft eine Maschine zum Antrieb eines Diamantdrahtseiles für das Schneiden von Steinen, mit der durch die Schaffung eines besonders großen Umschlingungswinkels durch Anordnung mehrerer angetriebener Seilräder ein hohes Maß an Antriebsmoment zur Erzeugung einer starken Zugkraft an dem Diamantdrahtseil erreicht wird. Insbesondere sind drei Seilräder vorgesehen, die alle in ein und derselben Ebene liegen und deren Mittelpunkte entweder annähernd auf einer Gerade liegen oder zusammen ein Dreieck bilden.

./...

Croydon Printing Company Ltd.

Fig. 1

Anmelderin:        Maschinenfabrik Korfmann GmbH

Bezeichnung:        Maschine zum Antrieb eines
Diamantdrahtseiles für das
Schneiden von Steinen

Die Erfindung betrifft eine Maschine zum Antrieb eines Diamantdrahtseiles für das Schneiden von Steinen, mit einem angetriebenen, teilweise von dem Diamantdrahtseil umschlungenen Seilrad und mit Umlenkrädern für einen fluchtenden Umlauf des Diamantdrahtseiles um das Seilrad.

Es sind Maschinen dieser Art bekannt, die für das Schneiden vorhandener Steinblöcke vorgesehen sind, bei denen um zwei in einem Abstand voneinander angeordnete Seilräder ein Diamantdrahtseil gespannt ist. Eines der Seilräder wird angetrieben, und beide Seilräder werden gegenüber einem Steinblock abgesenkt, so daß der untere Bereich des umlaufenden Diamantdrahtseiles den Block zerschneidet. Außerdem sind noch Maschinen bekannt, bei denen das Diamantdrahtseil auf der einen Seite um ein angetriebenes Seilrad und auf der anderen Seite ohne weitere Führung um einen Steinblock oder dergleichen herumgelegt ist, sieht man einmal von Umlenkrollen für einen fluchtenden Umlauf des Diamantdrahtseiles um das angetriebene Seilrad ab. Der Vorschub bei dieser letzten Maschine erfolgt durch eine Relativbewegung der gesamten Maschine gegenüber dem zu schneidenden Stein.

Ein dabei verwendetes Diamantdrahtseil besteht aus einer inneren Seele in Form eines üblichen endlosen Drahtseiles mit aufgezogenen diamantbesetzten Hülsen, die mit Hilfe von Federn oder Spangen in einem vorgegebenen Abstand gehalten sind. Mangels geeigneter Angriffspunkte zur Bildung eines Formschlusses wird die Antriebskraft von dem zugeordneten Seilrad mit Hilfe von Reibung auf das Diamantdrahtseil übertragen, wobei das Bett innerhalb des Seilrades zur Aufnahme des Diamantdrahtseiles mit einem mittelharten Kunststoff ausgekleidet ist, der zwar elastisch, jedoch sehr abriebfest ist. Im normalen Betrieb ist die Standzeit dieses Kunststoffbelages relativ hoch und damit befriedigend.

Es kommt jedoch gelegentlich vor, daß das Diamantdrahtseil unerwartet auf dem Wege durch den Stein eingeklemmt oder in sonstiger Weise einer Schwergängigkeit unterworfen wird, so daß der zwischen dem Seilrad und dem Diamantdrahtseil vorhandene Reibschluß nicht ausreicht, das Diamantdrahtseil weiter umlaufen zu lassen. Es kommt dann zu einer Relativbewegung zwischen dem stillstehenden Diamantdrahtseil und dem Seilrad, mit der Folge, daß in wenigen Sekunden aufgrund der abrasiven Wirkung der Diamanthülsen das Bett des Seilrades durchgeschliffen oder so weit aufgerissen ist, daß der Kunststoffbelag erneuert werden muß.

Es ist schon versucht worden, dieser Erscheinung durch eine stärkere Vorspannung des Diamantdrahtseiles zu begegnen, wodurch jedoch weitere Nachteile entstehen. Zum einen besteht die erhöhte Gefahr eines Seilrisses, zum anderen leidet dann die Standzeit des Kunststoffbelages an dem Seilrad, so daß dann aus diesem Grund ein vorzeitiger Wechsel des Kunststoffbelages erforderlich ist. Im übrigen muß jede Gefahr eines Seilrisses vermieden werden, da umstehende Personen bei einem Diamantdrahtseilriß sehr gefährdet sind.

Es ist demnach Aufgabe der Erfindung eine Maschine der eingangs genannten Art so zu verbessern, daß bei einer akzeptablen Standzeit des Seilradbettes die Gefahr einer unbeabsichtigten Relativbewegung zwischen dem Diamantdrahtseil und dem Seilrad ohne zusätzliche Gefährdung umstehender Personen vermieden wird.

Die Erfindung wird darin gesehen, daß mehrere angetriebene Seilräder vorhanden sind, um die das Diamantdrahtseil nacheinander geschlungen ist.

Die Erfindung sieht also vor, daß das Prinzip der Übertragung der Antriebskraft durch Reibschluß beibehalten, jedoch der Umschlingungswinkel des Diamantdrahtseiles um angetriebene Seilräder vergrößert wird. Während bisher Umschlingungswinkel von etwas über 180° benutzt wurden, sind mit Hilfe der Erfindung beispielsweise bei drei angetriebenen Seilrädern Umschlingungswinkel bis zu 800° und mehr möglich, wodurch eine entsprechend große Antriebskraft auf das Diamantdrahtseil übertragen werden kann, ohne dessen Vorspannung nennenswert erhöhen zu müssen. Wegen der übertragbaren großen Antriebskraft kann nun eine antriebsseitige Drehmomentüberwachung vorgesehen sein, mit deren Hilfe eine Schwergängigkeit des Diamantdrahtseiles erkannt und ihr durch Abschalten des Antriebes bzw. durch Nachlassen der Vorspannung begegnet werden kann.

Diese Möglichkeit bestand bisher nicht, da die Änderung des Antriebsmomentes bei gerade noch antreibendem gegenüber einem schon durchrutschenden Seilrad zu gering war, um gemessen und ausgewertet zu werden. Bei der erfindungsgemäßen Maschine führt eine Schwergängigkeit des Diamantdrahtseiles zu einem deutlich größeren Bedarf an Antriebsmoment, was sich in einer abfallenden Drehzahl oder in dem genannten Anstieg äußert.

Vorzugsweise liegen alle angetriebenen Seilräder innerhalb einer Ebene, wobei eine geradlinige oder dreieckige Konfiguration der jeweiligen Mittelpunkte der Seilräder zu besonders guten Umschlingungswinkeln führt. Als Antrieb für jedes Seilrad ist bevorzugt ein Elektromotor vorhanden, abweichend davon kann auch eine einzige Antriebsquelle vorhanden sein, deren Antriebskraft mit Hilfe eines Getriebes auf die einzelnen Seilräder übertragen wird. In beiden Fällen ist es zweckmäßig, eine Abschaltmöglichkeit für einzelne Seilräder vorzusehen, wenn die Schneidaufgabe nur eine geringe Antriebsleistung verlangt.

Zur Erzeugung eines möglichst gleichmäßigen Vorschubs ist in Weiterbildung der Erfindung vorgesehen, daß eine die Seilräder und deren Antrieb umfassende Antriebseinheit auf einem Führungsrahmen beweglich gelagert ist, wobei der Führungsrahmen ortsfest aufgestellt wird und die Antriebseinheit beispielsweise mit Hilfe einer Winde und einem zugeordneten Seil entlang dem Führungsrahmen fortbewegt wird. Wenn der zur Verfügung stehende Vorschubweg aufgezehrt ist, wird das Ende des Seiles von der Antriebseinheit gelöst und in einem Abstand in Vorschubrichtung vor dem Führungsrahmen mit Hilfe eines Ankers oder dergleichen an einem Punkt der Umgebung befestigt. Durch eine erneute Betätigung der Winde wird der Führungsrahmen in Vorschubrichtung nachgezogen, während die Antriebseinheit, gehalten durch das immer noch in Stellung befindliche Diamantdrahtseil, in ihrer Stellung verharrt. Nach dem Ortswechsel des Führungsrahmens wird das der Winde zugeordnete Seilende von dem vorübergehenden Fixpunkt gelöst, wieder an der Antriebseinheit angeschlagen und der Führungsrahmen in seiner neuen Position gegenüber dem Untergrund festgelegt. Nun wird der Schneidvorgang fortgesetzt, wobei die Betätigung der Winde die Antriebseinheit auf dem Führungsrahmen als Vorschubbewegung voranzieht.

Die Winde ist vorzugsweise mit einer Überlastsicherung ausgestattet, damit eine Überlastung des Diamantdrahtseiles vermieden wird. Beispielsweise kann das Diamantdrahtseil innerhalb des zu schneidenden Steines Zonen durchlaufen, die härter sind als die vorangehenden Zonen, so daß die ursprünglich eingestellte Vorschubgeschwindigkeit für die Durchschneidung dieser Zone zu schnell ist. Zur Verwirklichung einer Überlastsicherung kann die Vorschubkraft gemessen werden, so daß bei Überschreiten eines vorgegebenen Grenzwertes der Vorschub vorübergehend eingestellt wird, zumindest aber reduziert wird. Abweichend davon kann im Zusammenhang mit einem Sperrklinkenvorschub eine Leerhubeinrichtung vorhanden sein, deren Einzelheiten im Zusammenhang mit der Beschreibung der Ausführungsbeispiele noch näher erläutert werden.

Die erfindungsgemäße Maschine einschließlich einiger ihrer Weiterbildungen kann für die beiden eingangs genannten Arten zum Schneiden von Steinen eingesetzt werden. Der nicht angetriebene Bereich des Diamantdrahtseiles kann also sowohl um ein Umlenk-Seilrad als auch direkt um einen Stein geschlungen sein. Die Weiterbildungen bezüglich des Vorschubes kommen selbstverständlich nur im Zusammenhang mit letzterer Schneidart in Betracht.

Nachfolgend werden Ausführungsbeispiele der Erfindung, die in der Zeichnung dargestellt sind, näher erläutert; darin bedeuten:

Fig. 1 eine Seitenansicht der erfindungsgemäßen Maschine in einem ersten Ausführungsbeispiel,

Fig. 2 eine Querschnittsansicht entlang der Linie II - II der Fig. 1,

Fig. 3 eine Draufsicht auf die erfindungsgemäße Maschine,

Fig. 4 eine Teil-Querschnittsansicht eines Seilrades,

Fig. 5 eine Draufsicht auf eine Winde an der erfindungsgemäßen Maschine,

Fig. 6 eine Seitenansicht der Winde gemäß Fig. 5 und

Fig. 7 eine schematische Ansicht der Anordnung der Seilräder gemäß eines weiteren Ausführungsbeispiels der Erfindung.

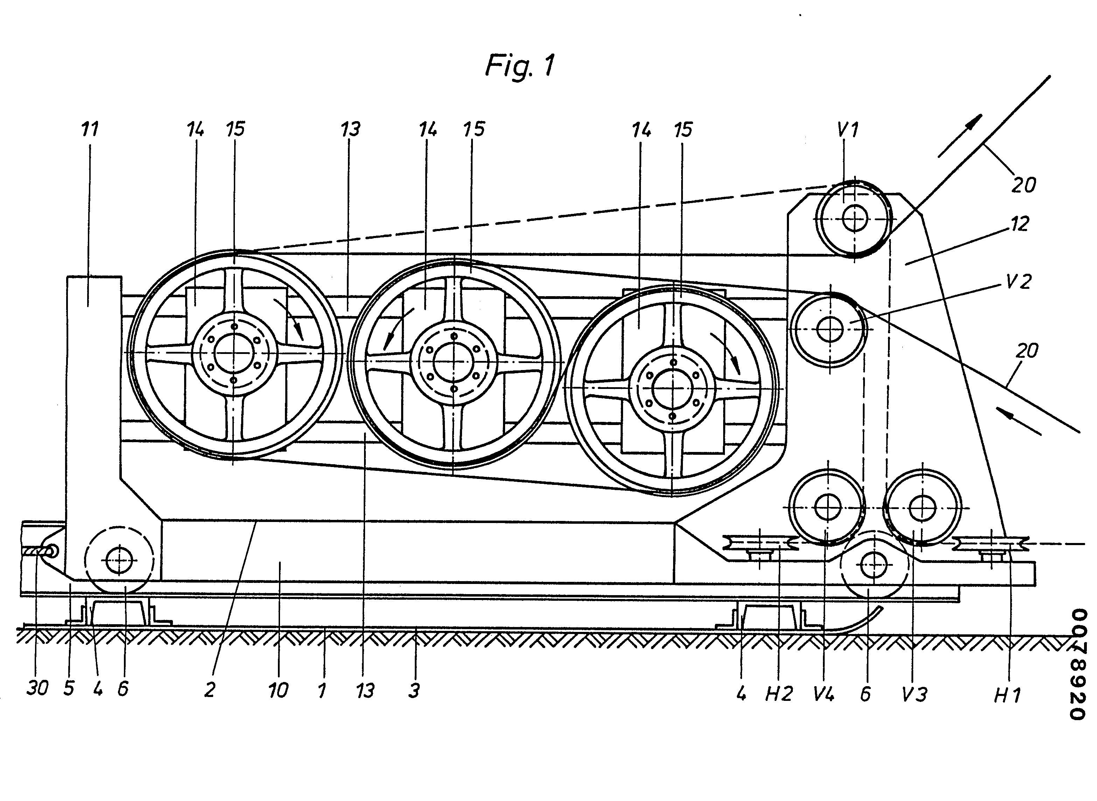

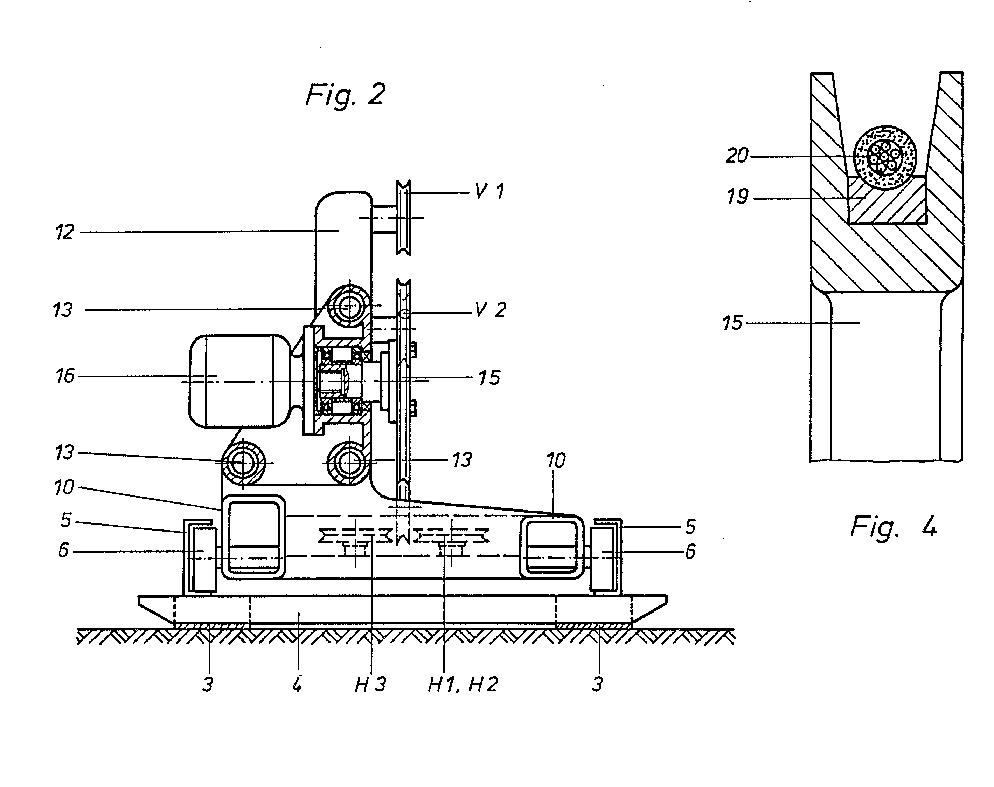

Die in den Fig. 1 bis 3 dargestellte erfindungsgemäße Maschine besteht aus einem Führungsrahmen 1, der beispielsweise auf einem steinigen Untergrund verankert ist. Der Führungsrahmen 1 besteht im wesentlichen aus kufenartigen Schienen 3, aus Quertraversen 4 und zwei U-Profilen 5, in denen Rollen 6 laufen, die einer Antriebseinheit 2 zugeordnet sind.

Auf der Antriebseinheit 2 sind die eigentlichen Antriebsorgane der Maschine angeordnet. Sie besteht aus Längsträgern 10, aus einem hinteren Ständer 11 und aus einem vorderen Leitständer 12, zwischen denen Führungsstangen 13 zur Aufnahme von Blöcken 14 angeordnet sind, an denen wiederum Seilräder 15 einschließlich ihrer elektrischen Antriebsmotoren 16 gelagert sind. Die Ständer 11 und 12, die Längsträger 10 sowie die Stangen 13 bilden einen geschlossenen Aufbau großer Stabilität.

Um die Seilräder 15 ist ein Diamantdrahtseil 20 herumgelegt, und zwar in der Weise, daß ein möglichst großer Gesamtumschlingungswinkel an allen Seilrädern 15 entsteht. Das Diamantdrahtseil läuft um das mittlere Seilrad 15 ein, umschlingt das vordere, dem Leitständer 12 zugewandte Leitrad 15 in entgegengesetzter Krümmung und läuft nach der Umschließung des dem Ständer 11 zugewandten Seilrades 15 wieder aus der Maschine heraus. Die Seilräder 15 sind in üblicher Weise gestaltet, also mit einer nach außen offenen Rille versehen (Fig. 4), in der ein Kunststoffbett 19 zur Aufnahme des Diamantdrahtseiles 20 eingelassen ist. Das Kunststoffbett 19 ist in der Regel als endloser Ring ausgebildet, der nach der Entfernung der einen Profilhälfte (nicht dargestellt) in die funktionsgemäße Lage gebracht werden kann, worauf das Profil des jeweiligen Seilrades 15 wieder vervollständigt wird.

An dem Leitständer 12 sind mehrere Umlenkrollen angeordnet, die für einen fluchtenden Ein- und Auslauf des Diamantdrahtseiles 20 in die offenen Profile der Seilräder 15 sorgen. Für einen vertikalen Schnitt vor der erfindungsgemäßen Maschine sind zwei Umlenkrollen V1 und V2 vorhanden, die eine Spreizung des um einen Stein gelegten Diamantdrahtseiles 20 in einem sehr breiten Winkel gestatten. Bei Vertikalschnitten unterhalb bzw. neben der Maschine sind im unteren Bereich zwei weitere Umlenkrollen V3 und V4 vorhanden, um die das Diamantdrahtseil 20 zusätzlich herumgelegt wird. Sie dienen ebenfalls zur Führung des Diamantdrahtseiles 20 bei einem Horizontalschnitt, bei dem noch weitere Umlenkrollen H1 und H2 in Funktion treten, die mit den daneben angeordneten Umlenkrollen V3 und V4 ausgefluchtet sind. Beim Aus- bzw. Einlauf des Diamantdrahtseiles 20 um die Umlenkrollen H1 und H2 werden alle Horizontalschnitte vor und neben der Maschine getätigt. Sämtliche Umlenkrollen sind vorzugsweise bezüglich ihrer Lage einstellbar, um abweichende Ein- und Auslaufwinkel bei nicht streng horizontalen bzw. streng vertikalen Schnitten ausgleichen zu können. Neben einer vorgegebenen Einstellung kann auch eine selbsttätige Einstellung vorgesehen sein, was jedoch nicht weiter dargestellt ist.

Die Seilräder 15 werden von jeweils einem Elektromotor 16 angetrieben, der von einer gemeinsamen Steuerung gespeist wird. Die Steuerung stellt sicher, daß jeder Elektromotor 16 das gleiche Antriebsmoment auf das Diamantdrahtseil 20 überträgt, damit nicht zwischen den einzelenen Seilrädern 15 innere Drahtseilspannungen entstehen, die als innere Kräfte den Zusammenhalt des Seiles gefährden, jedoch keinen Beitrag für den Antrieb liefern. Die Blöcke 14 sind im wesentlichen untereinander gleich, lediglich die jeweilige Mitte der Seilräder 15 liegt zu dem Leitständer 12 hin tiefer als bei dem vorangehenden Block 14, so daß die Seilräder 15 annähernd auf einer leicht geneigten geraden Linie angeordnet sind. Dadurch wird ein Kontakt des Diamantdrahtseiles 20 mit anderen Bereichen während der einzelnen Umschlingungen sicher vermieden. Derselbe Zweck wird erreicht, wenn die Stangen 13 schon eine leichte Neigung aufweisen und die Blöcke 14 untereinander gleich sind. Eine derartige Anordnung hat den Vorteil einer Serienfertigung für die Blöcke 14.

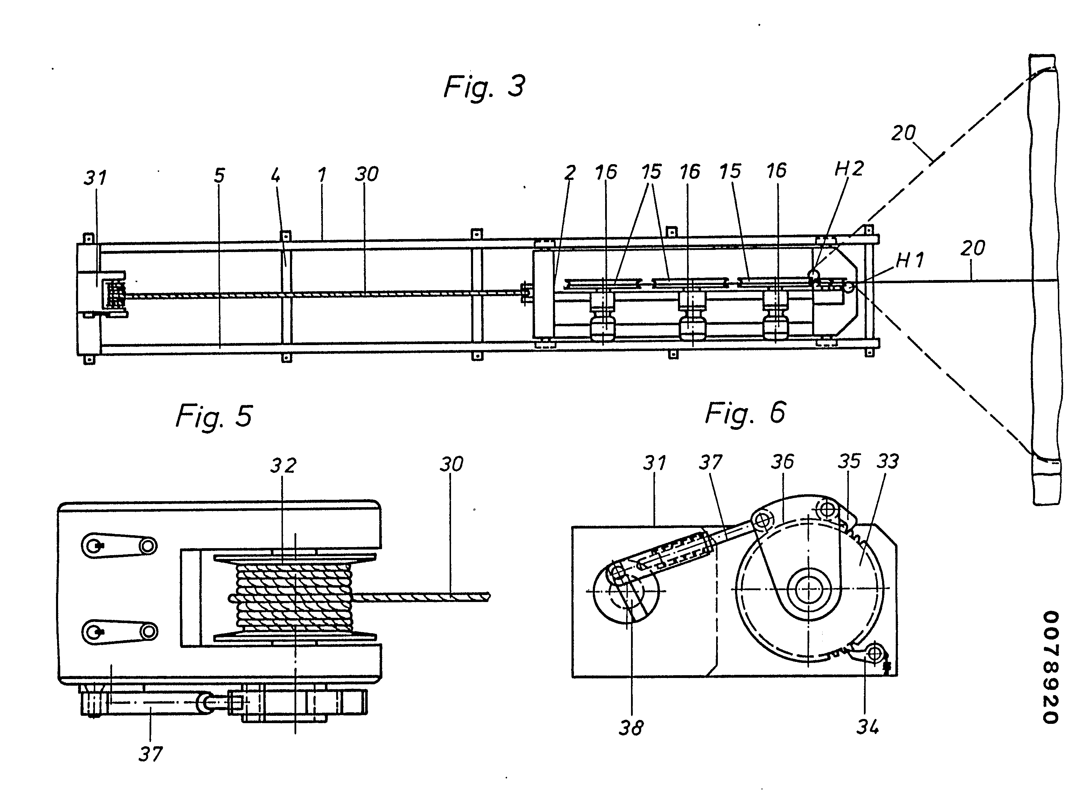

In der Fig. 3 sind Einzelheiten der Vorschubeinrichtung der Maschine dargestellt. An der dem Leitständer 12 abgewandten Seite ist an dem Führungsrahmen 1 eine Winde 31 befestigt, deren zugeordnetes Seil 30 in der Nähe des Ständers 11 an der Antriebseinheit 2 lösbar befestigt ist. Die in der Fig. 3 dargestellte Situation entspricht derjenigen, die nach dem Instellungbringen der Maschine und dem Durchfahren eines noch kurzen Vorschubweges vorhanden ist. Durch eine fortlaufende Betätigung der Winde 31 wird die Antriebseinheit 2 nach links auf dem Führungsrahmen 1 verschoben, der mit Hilfe von Ankern an dem Untergrund befestigt ist. Diese Bewegung verursacht eine Zugkraft auf das Diamantdrahtseil 20, die im Zusammenhang mit der Umlaufbewegung zu einer Schneidwirkung an dem Stein führt.

Aus den Fig. 5 und 6 sind Einzelheiten des Windenantriebs zu erkennen. Eine Seiltrommel 32 der Winde 31 ist an der einen Außenseite mit einem Klinkenrad 33 verbunden, das von einer Sperrklinke 34 an der einen Drehrichtung gehindert ist. Mit Hilfe einer Vorschubklinke 35, die, geführt von einer Schwinge 36, oszillierend bewegt wird, wird das Klinkenrad 33 und damit die Seiltrommel 32 schrittweise voranbewegt. Die oszillierende Bewegung wird durch einen Exzenter 38 erreicht, dessen Exzentrizität mit Hilfe eines Gleitsteines eingestellt werden kann. Zwischen dem Exzenter 38 und der Schwinge 36 ist eine Kuppelstange 37 vorgesehen, die eine vorgegebene Länge aufweist, jedoch bei Überschreiten einer bestimmten Schubkraft in sich nachgibt, also federnd eine kürzere Länge einnimmt.

Durch diese Anordnung ist die Vorschubbewegung gegen eine Überlastung gesichert, mit anderen Worten, das Diamantdrahtseil 20 wird vor einer Überdehnung geschützt. Nämlich immer dann, wenn die Zugkraft auf die Seiltrommel 32 so groß ist, daß die Kuppelstange 37 einfedert, läuft sich die Exzenterbewegung innerhalb der Kuppelstange 37 tot, so daß keine Einrastung in die nächste Klinke auf dem Klinkenrad 33 erfolgt. Trotz Exzenterdrehung bewegt sich also die Seiltrommel 32 nicht, bis die Vorspannung des gesamten Systems so weit nachläßt, daß die Kuppelstange 37 nicht mehr einfedert und damit eine Weiterrastung der Vorschubklinke 35 erfolgen kann.

Nach der Aufzehrung des Vorschubweges auf dem Führungsrahmen 1 ist dessen Versetzung erforderlich. Dazu wird das Seil 30 von der Antriebseinheit 2 gelöst, mit Hilfe eines Schnellgangs von der Seiltrommel 32 der Winde 31 abgespult und in einiger Entfernung in Vorschubrichtung von dem Führungsrahmen 1 vorübergehend befestigt, beispielsweise mit Hilfe eines Ankers innerhalb des Gesteines. Danach wird die Befestigung des Führungsrahmens von dem Untergrund gelöst und die Winde 31 erneut betätigt. Dabei wird der Führungsrahmen 1 auf den Fixpunkt zu gezogen, während die Antriebseinheit 2 gegenüber der Umgebung in ihrer Lage verharrt und gegenüber dem Führungsrahmen 1 nach rechts rollt. Nachdem eine Lage erreicht ist, die der gemäß der Fig. 3 angenähert ist, wird das Ende des Seiles 30 wieder nach vorheriger Abspulung des Seiles an der Antriebseinheit 2 befestigt und der Führungsrahmen 1 in der neuen Stellung am Untergrund befestigt. Die Maschine steht nun wieder für einen Vorschubweg in der vollen Länge des Führungsrahmens 1 zur Verfügung.

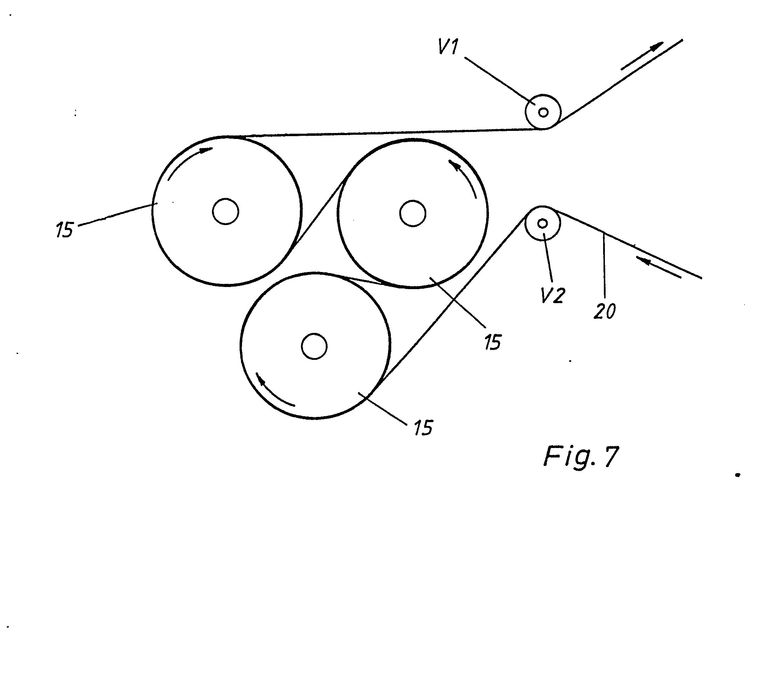

In der Fig. 7 ist ein weiteres Anordnungsbeispiel für die Seilräder 15 im Schema dargestellt. Statt annähernd auf einer Linie sind die Mittelpunkte der Seilräder 15 in einem Dreieck angeordnet, wodurch ein noch besserer Gesamt-Umschlingungswinkel erzielt wird als bei dem vorangehend geschilderten Ausführungsbeispiel. Auch ist der Platzbedarf in Längsrichtung der Maschine geringer, da die Seilräder 15 mehr oder weniger ineinander verschachtelt sind, so daß die Maschine insgesamt leichter und steifer werden kann. Allerdings ist die Bauhöhe beträchtlich größer bzw. die Baubreite, wenn die dargestellte Anordnung insgesamt horizontal liegt, also parallel zu der Ebene des Führungsrahmens 1. Im letzteren Fall ergibt sich eine besonders gute Krafteinleitung von dem Diamantdrahtseil 20 auf den Führungsrahmen 1, da das Moment, das um eine horizontale Achse aufgrund der Bauhöhe entsteht, besonders gering ist.

*12*

Patentansprüche

1. Maschine zum Antrieb eines Diamantdrahtseiles für das Schneiden von Steinen, mit einem angetriebenen, teilweise von dem Diamantdrahtseil umschlungenen Seilrad und mit Umlenkrädern für einen fluchtenden Umlauf des Diamantdrahtseiles um das Seilrad, dadurch g e k e n n z e i c h n e t, daß mehrere angetriebene Seilräder (15) vorhanden sind, um die das Diamantdrahtseil (20) nacheinander geschlungen ist.

2. Maschine nach Anspruch 1, dadurch g e k e n n - z e i c h n e t, daß alle Seilräder (15) innerhalb ein und derselben Ebene liegen.

3. Maschine nach Anspruch 1 oder 2, dadurch g e - k e n n z e i c h n e t, daß die Mittelpunkte der Seilräder auf einer geraden Linie angeordnet sind, die gegebenenfalls gegenüber der Horizontalen leicht geneigt angeordnet sind.

4. Maschine nach einem der Ansprüche 1 - 3, dadurch g e k e n n z e i c h n e t, daß drei Seilräder (15) vorgesehen sind, und daß das Diamantdrahtseil (20) zunächst um das mittlere, dann mit entgegengesetzter Krümmung um das vordere und schließlich um das hintere Seilrad geführt ist.

5. Maschine nach einem der Ansprüche 1 - 4, dadurch g e k e n n z e i c h n e t, daß jedes Seilrad (15) von einem eigenen Elektromotor (16) angetrieben
wird.

6. Maschine nach einem der Ansprüche 1 - 4, dadurch
g e k e n n z e i c h n e t, daß für alle Seilräder ein einziger Elektromotor und ein Getriebe
zur Übertragung der Antriebskraft auf die einzelnen
Seilräder vorhanden ist, und daß gegebenenfalls die
Antriebsverbindung zu einigen der Seilräder abschaltbar ist.

7. Maschine nach einem der vorhergehenden Ansprüche,
dadurch g e k e n n z e i c h n e t, daß jedes
Seilrad (15) einschließlich seines Antriebes (16)
an einem Träger (14) angeordnet ist, daß jeder
Träger (14) mit Hilfe von Stangen (13) gehalten ist,
und daß die Stangen (13) an ihren Enden von miteinander verbundenen Ständern (11, 12) gestützt sind.

8. Maschine nach Anspruch 1, 2, 5 oder 6, dadurch g e -
k e n n z e i c h n e t, daß drei Seilräder (15)
vorgesehen sind, deren Mittelpunkt ein Dreieck
bilden, und daß das Diamantdrahtseil (20) zunächst
das mittlere, dann mit entgegengesetzter Krümmung
das vordere und schließlich mit nochmals entgegengesetzter Krümmung das hintere Seilrad (15) umschließt.

9. Maschine nach einem der vorhergehenden Ansprüche,
dadurch g e k e n n z e i c h n e t, daß eine aus
den Seilrädern (15) einschließlich ihrer Antriebe
(16) und Halterungen (10 bis 14) gebildete Antriebseinheit (2) auf einem Führungsrahmen (1) beweglich gelagert ist.

10. Maschine nach Anspruch 10, dadurch g e k e n n -
z e i c h n e t, daß auf der dem Diamantdrahtseil-
Einlauf und -Auslauf entgegengesetzten Seite an
dem Führungsrahmen (1) eine Winde (31) befestigt ist, deren zugeordnetes Seil (30) an der Antriebseinheit (2) lösbar befestigt ist.

11. Maschine nach Anspruch 10, dadurch g e k e n n -
z e i c h n e t, daß die Winde (31) mit einer Vorschubeinrichtung mit Überlastsicherung versehen
ist.

12. Maschine nach Anspruch 10, dadurch g e k e n n -
z e i c h n e t, daß der Antrieb der Winde (31) mit
Hilfe einer motorisch bewegten Vorschubklinke (35)
und einem Klinkenrad (33) erfolgt.

13. Maschine nach Anspruch 12, dadurch g e k e n n -
z e i c h n e t, daß die Vorschubklinke (35) mit
einer Kuppelstange (37) zur Übertragung der Antriebskraft verbunden ist, und daß die Kuppelstange
(37) gegen die Wirkung einer Feder längenveränderbar ist.

14. Maschine nach einem der Ansprüche 10 - 12, dadurch
g e k e n n z e i c h n e t, daß die Winde (31)
außer in der Vorschubgeschwindigkeit noch in einem
Schnellgang bewegbar ist.

15. Maschine nach Anspruch 13, dadurch g e k e n n -
z e i c h n e t, daß der Schnellgang direkt auf
die Winde (31) einwirkt.

## Fig. 1

# Fig. 2

V 1
V 2

12
13
16
13 13
10 10
5 5
6 6

3 4 H 3 H1, H2 3

# Fig. 4

20
19
15

4/4

0078920

Fig. 3

Fig. 5

Fig. 6

0078920

Fig. 7

0078920